# FASCICULE DE BREVET EUROPEEN

(11) **EP 1 057 673 B1**
(45) Date de publication et mention de la délivrance du brevet: **19.01.2005**
(21) Numéro de dépôt: 00401519.4
(22) Date de dépôt: 30.05.2000
(51) Int. Cl.: B60J 10/00, B60J 10/08, B60J 5/06

(54) **Dispositif anti-pincement pour porte coulissante de véhicule automobile**
Einklemmschutz für Schiebetür eines Kraftfahrzeuges
Anti-nipping device for a sliding door of a motor vehicle

(30) Priorité: 02.06.1999 FR 9906944
(43) Date de publication de la demande: 06.12.2000
(73) Titulaire: Peugeot Citroen Automobiles SA, 92200 Neuilly sur Seine (FR)
(72) Inventeur: Berthe, Pascal, 95490 Vaureal (FR)
(74) Mandataire: Robert, Jean-François

(56) Documents cités:
- EP-A- 0 099 116
- EP-A- 0 916 538
- DE-A- 4 417 583
- GB-A- 2 296 930

## Description

La présente invention concerne un dispositif anti-pincement pour porte coulissante de véhicule automobile. L'invention concerne plus particulièrement un dispositif destiné à empêcher ou limiter le coincement d'un corps tel qu'un doigt entre la porte coulissante et au moins un élément adjacent lors de la fermeture de la porte coulissante.

Des moyens d'anti-pincement connus sont notamment ceux utilisés pour les lèvres-vitres électriques. Le document FR 2651269 mentionne un dispositif de détection d'obstacle comprenant deux pistes électriquement conductrices maintenues séparées au repos par un ou des moyens souples élastiques tel qu'un joint. La présence d'un obstacle entre la vitre et le joint peut induire le contact entre les pistes et ainsi déclencher l'arrêt du moteur du lève-vitre. Le document FR 2564971 désigne un dispositif similaire.

Ces dispositifs présentent l'inconvénient d'être onéreux, de rendre difficile le montage des éléments et sont parfois sujets à des dysfonctionnements, par exemple des contacts parasites.

On connaît également, comme décrit dans le document FR 2572765, des dispositifs qui utilisent la mesure du gradient de vitesse de la porte afin de détecter la présence d'un obstacle. Ces dispositifs présentent également les inconvénients déjà cités et peuvent de plus nécessiter un calibrage relativement complexe par des essais.

D'autres moyens d'anti-pincement connus comme indiqué dans le document FR 2659280, comprennent un conducteur de lumière situé dans un joint, combiné à un émetteur et à un récepteur de lumière situés de part et d'autre du conducteur. La présence d'un obstacle induit une déformation du conducteur de lumière qui est détectée par le récepteur. Ce dernier peut alors modifier la commande du moteur du lève-vitre.

Ces dispositifs présentent les inconvénients d'une réalisation délicate et coûteuse.

Par ailleurs, le document EP-A-0099116 décrit une porte latérale coulissante d'un véhicule automobile pourvue d'une bande d'étanchéité disposée sur le bord avant de la porte et destinée à assurer une étanchéité entre la porte et un élément adjacent tel que le pied milieu ou une porte adjacente, de manière à empêcher que l'eau ne pénètre dans l'habitacle. Une telle bande peut certes limiter le coincement d'un corps étranger entre la porte et un élément adjacent du véhicule mais le document EP-A-0099116 n'indique pas de quelle manière le coincement peut être empêché lorsque la porte est assistée par des moyens motorisés d'assistance à la fermeture.

Le but de la présente invention est de proposer un dispositif anti-pincement pour porte coulissante qui permet de pallier les inconvénients mentionnés ci-dessus.

A cet effet, la présente invention concerne un dispositif anti-pincement pour porte coulissante de véhicule automobile, l'ouverture et/ou la fermeture de la porte coulissante pouvant être assistée par des moyens motorisés d'assistance, ces derniers pouvant être inhibés par des moyens de détection d'obstacle lors de la manoeuvre de la porte, lesdits moyens de détection d'obstacle étant eux-même inhibés par des moyens de commutation après le franchissement d'au moins un cran de fermeture par la porte coulissante, caractérisé en ce que le dispositif anti-pincement comporte au moins un profilé disposé sur la porte et/ou sur au moins un élément adjacent conformé pour obstruer l'espace sensiblement vertical entre la porte coulissante et l'élément adjacent sur au moins une partie de la hauteur de l'ouverture, lorsque la porte coulissante a franchi au moins ledit cran de fermeture, de sorte que le profilé empêche ou limite le coincement d'un corps étranger tel qu'un doigt après le franchissement du cran de fermeture.

Le dispositif anti-pincement suivant l'invention peut également comporter une ou plusieurs des caractéristiques suivantes :
- le profilé comporte dans sa partie avant au moins une lèvre apte à être au moins en partie masquée par la porte et/ou l'élément adjacent lorsque la porte coulissante est complètement fermée.
- le profilé est fixé sur au moins un bord sensiblement vertical de la porte et/ou sur l'élément adjacent au bord ;
- le profilé est fixé par collage ;
- le profilé est enfilé par chevauchement sur une arête saillante d'un bord sensiblement vertical de la porte et/ou de l'élément adjacent ;
- le profilé est en matière rigide ou semi-rigide du type plastique ou caoutchouc ;
- la lèvre du profilé est déformable lors du coincement d'un corps étranger entre le bord de la porte et l'élément adjacent ;
- le dispositif anti-pincement équipe un véhicule comportant au moins une porte coulissante, des moyens motorisés d'assistance à l'ouverture et/ou à la fermeture de la porte, des moyens de détection d'un obstacle lors de la manoeuvre de la porte aptes à inhiber les moyens d'assistance ;
- le dispositif anti-pincement équipe un véhicule comprenant des moyens de commutation aptes à inhiber les moyens de détection d'obstacle après le franchissement d'au moins un cran de fermeture par la porte coulissante ;

L'invention sera mieux comprise à l'aide de la description ci-après qui en donne un exemple non limitatif de réalisation pratique et qui est illustrée par les dessins joints dans lesquels :
- la figure 1 représente une vue latérale partielle d'un véhicule pourvu d'une porte coulissante et d'un dispositif anti-pincement selon l'invention,
- la figure 2 représente une section transversale du bord avant de la porte coulissante de la figure 1 en position fermée,
- la figure 3 représente une section tranversale des différentes positions de la porte coulissante de la figure 1 lors de la fermeture, le dispositif anti-pincement n'étant pas représenté pour des raisons de clarté du dessin.

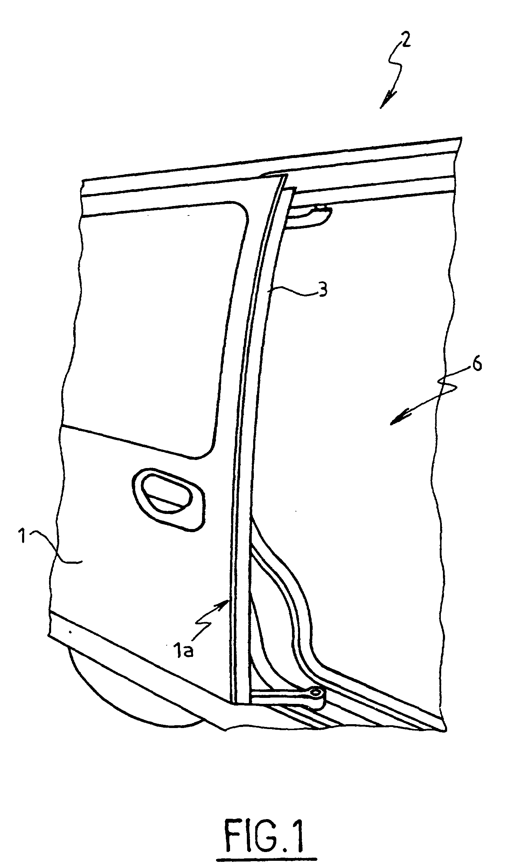

On a représenté partiellement à la figure 1, une porte coulissante 1 d'un véhicule automobile 2, en position ouverte. Un profilé 3 est fixé sur le bord avant 1a, autrement appelé chant avant de la porte 1.

Dans le cas où un corps étranger, par exemple une main ou un doigt se mettrait sur le passage de la porte coulissante 1 lors de la fermeture de celle-ci, le dispositif selon l'invention permet d'adoucir le contact entre le corps et la porte 1. Notons que le dispositif selon l'invention permet de protéger efficacement un corps étranger introduit entre la porte 1 et l'élément adjacent 4, 5, selon une direction sensiblement transversalement à la direction de coulissement de la porte 1.

A cet effet, le profilé 3 est un moyen rigide ou semi-rigide, par exemple en matériau de type plastique ou caoutchouc qui peut éventuellement évoquer un joint et être désigné comme tel.

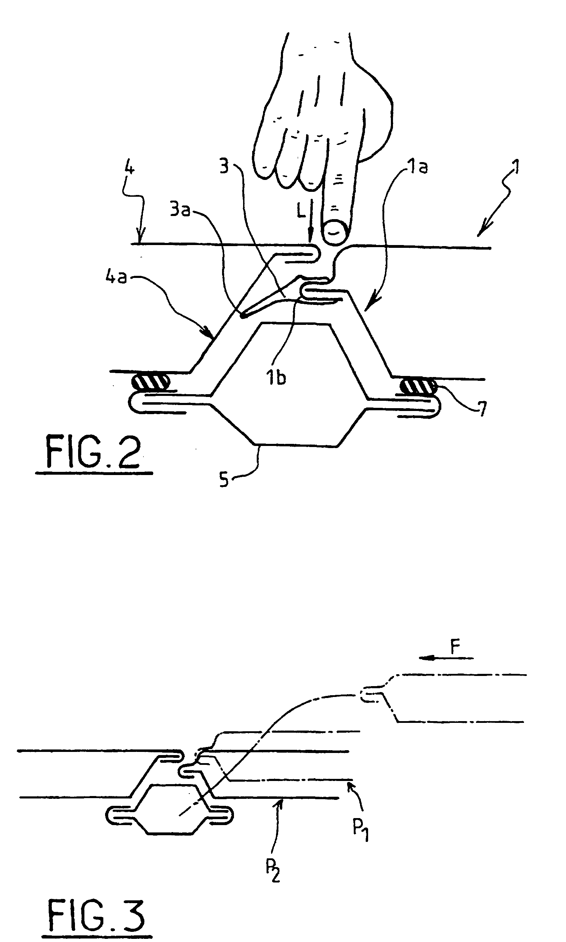

Comme le montre la figure 2, le profilé 3 peut comporter une lèvre 3a déformable lors du coincement d'un corps étranger entre le bord avant 1a de la porte coulissante 1 et un élément adjacent, lors de la fermeture de la porte 1. L'élément adjacent peut être, par exemple, le bord arrière de la porte avant 4, ou la structure 5 du véhicule tel que le pied milieu.

Cette possibilité d'amortissement du choc sera d'autant plus avantageuse que la vitesse de fermeture de la porte 1 sera importante et que le corps étranger opposera une résistance au mouvement de fermeture.

La déformation de la lèvre 3a du profilé 3 peut également assurer un rôle préventif à toute blessure d'un utilisateur, lors de la fermeture de la porte 1. En effet, lorsqu'un membre vient se coincer à la fermeture de la porte, la lèvre 3a du profilé stimule les facultés réflexes de la personne, tout en se déformant, ce qui permet à cette dernière de retirer son membre coincé avant un pincement plus violent. Dans ce cas de figure, les dommages sont d'autant plus minimes que la lèvre 3a n'a pas atteint sa déformation maximale.

Le dispositif selon l'invention présente d'autres caractéristiques avantageuses lors de la phase finale de la fermeture de la porte coulissante 1. Le système de fermeture de la porte 1 peut comporter classiquement deux crans de fermeture. La figure 3 représente la porte 1 dans une première position P1 qui correspond au premier cran de fermeture et dans une seconde position P2 qui correspond au second cran de fermeture. Notons que cette dernière position P2 et le second cran associé correspondent à une position complètement fermée de la porte 1. La position P1 et le premier cran associé correspondent quant à eux à une position légèrement en amont de la position P2, c'est à dire avec un léger entrebâillement ou espace au niveau du bord avant 1a de la porte 1. Ce premier cran de fermeture de la porte 1 peut avantageusement être employé pour activer ou désactiver des moyens automatisés associés au déplacement de la porte 1, notamment ceux qui seront décrits ci-après.

Selon l'invention, le profilé 3 peut être conformé pour obstruer l'espace entre le bord avant 1a de la porte 1 et l'élément adjacent 4 ou 5, dès lors que la porte 1 a franchi le premier cran de fermeture. C'est à dire que la dimension du joint dans la direction longitudinale par rapport au véhicule est au moins sensiblement égale à la dimension longitudinale de l'espace situé entre le bord avant 1 a de la porte 1 et l'élément adjacent 4 ou 5. De cette façon, le profilé peut interdire l'introduction d'un doigt entre le bord avant 1a de la porte 1 et l'élément adjacent 4 ou 5 dès que la porte se trouve entre ses positions de fermeture P1 et P2.

Cette particularité peut s'avérer très avantageuse dans le cas, par exemple, d'un véhicule comportant une porte coulissante 1, des moyens motorisés d'assistance à la fermeture et/ou à l'ouverture. Un tel véhicule comporte généralement des moyens de détection d'obstacle lors de la manoeuvre de la porte 1, aptes à inhiber les moyens d'assistance. Ces moyens de détection d'obstacle utilisent par exemple la mesure d'un gradient de vitesse de la porte 1 lors de son déplacement, et peuvent par exemple commander l'arrêt du moteur d'assistance en cas de détection d'un obstacle.

Afin de permettre à la porte 1 de se fermer en comprimant fortement le joint d'étanchéité 7, un tel véhicule est en général pourvu de moyens de commutation destinés à inhiber les moyens de détection d'obstacle lors de la phase finale de fermeture de la porte 1. Ces moyens de commutation peuvent par exemple détecter le passage du premier cran de fermeture de la porte 1. Cette inhibition des moyens de détection s'avère utile lorsque le joint d'étanchéité 7 oppose un effort important à celui de la porte 1 au cours de la fermeture. En effet, cet effort ne doit pas être perçu comme étant dû à un obstacle.

A ce titre, lorsque la porte se situe entre la position de premier cran P1 et la position de second cran P2, il peut subsister un espace dangereux entre le bord 1a de la porte 1 et un élément adjacent, par exemple le bord arrière de la porte avant 4. En effet, le coincement d'un doigt dans cette phase de fermeture, même s'il est détecté, ne provoque pas l'arrêt des moyens d'assistance.

Le profilé 3 permet avantageusement d'obstruer cet espace, sur tout ou partie de la hauteur de l'ouverture 6, par exemple sur la partie susceptible d'être atteinte naturellement par la main d'un enfant ou d'un adulte. La forme du profilé est telle que cette obstruction est réalisée au moins entre les positions de premier cran P1 et de second cran P2 de la porte 1, c'est à dire au moins pendant la course de la porte 1 considérée comme particulièrement dangereuse.

En position de fermeture complète de la porte coulissante 1, dite position de second cran P2, le profilé 3 peut également être conformé pour combler visuellement et/ou tactilement l'espace situé entre la porte 1 et l'élément adjacent 4 ou 5. Le profilé dissuade ainsi de l'introduction d'un corps extérieur entre les parties citées précédemment.

On notera que la lèvre 3a du profilé 3 peut avantageusement venir se masquer derrière l'élément adjacent 4, 5, lorsque la porte 1 se trouve dans sa position de second cran P2, c'est à dire en position complètement fermée.

De cette façon, la partie visible du joint peut être relativement peu importante pour des raisons esthétiques, lorsque la porte 1 est complètement fermée.

Par ailleurs, notons que dans cette même position de second cran P2, la lèvre avant 3a du profilé 3 vient se loger dans une zone délimitée par l'extrémité avant 1a de la porte 1, et l'élément adjacent 4, 5, cette zone étant conformée pour ne pas faire obstacle au profilé 3 et donc ne pas déformer significativement ce dernier. De cette manière, les qualités mécaniques et esthétiques du profilé 3 sont sensiblement conservées au fil du temps et des manipulations de la porte 1.

En outre, on conçoit aisément que le dispositif selon l'invention puisse empêcher ou limiter le coincement d'un corps venant aussi bien de l'extérieur du véhicule 2 que de l'intérieur du véhicule.

Dans l'exemple de réalisation décrit (figure 2), le profilé comporte à une extrémité arrière une partie en forme de canal, qui est enfilée par chevauchement sur une arête saillante 1b du bord 1a de la porte 1 et/ou de l'élément adjacent 4 ou 5.

Bien entendu, l'invention n'est pas limitée à l'exemple de réalisation qui vient d'être décrit.

On peut notamment envisager que le profilé 3 soit fixé sur la porte adjacente 4 à la porte coulissante 1, par exemple sur le bord arrière de la porte avant ou encore sur la structure 5 du véhicule tel que le pied milieu.

Plusieurs profilés peuvent également être disposés sur la porte 1 et/ou sur l'élément adjacent 4 ou 5, afin de couvrir une hauteur suffisante du bord avant 1a de la porte 1.

Le profilé peut éventuellement être constitué d'un support ou d'une armature métallique, par exemple en forme de U noyé dans le caoutchouc, pour le renforcer et/ou contribuer à son maintien sur le bord 1a de la porte 1 et/ou de l'élément adjacent 4 ou 5.

La fixation du profilé peut également être réalisée par collage sur la porte coulissante 1 ou sur l'élément adjacent 4 ou 5 et/ou par tout autre moyen équivalent, par exemple par coincement.

Enfin, de façon plus générale, on conçoit que le dispositif anti-pincement selon l'invention soit applicable dans son principe aux systèmes de fermeture automatiques tels que des vitres électriques ou des toits ouvrant électriques. Le profilé peut par exemple être monté sur un cadre de porte destiné à recevoir une vitre par coulissement. Le profilé peut également être fixé sur un bord d'un élément mobile de toit ouvrant ou sur un bord de l'ouverture correspondante de toit ouvrant.

Ce dispositif anti-pincement peut être appliqué aux systèmes de fermeture automatiques, aussi bien lorsqu'ils sont pourvus de moyens de détection d'obstacle pouvant être inhibés notamment en phase finale de fermeture, que lorsqu'ils en sont dépourvus.

## Revendications

1. Dispositif anti-pincement pour porte coulissante (1) de véhicule automobile, l'ouverture et/ou la fermeture de la porte coulissante pouvant être assistée par des moyens motorisés d'assistance, ces derniers pouvant être inhibés par des moyens de détection d'obstacle lors de la manoeuvre de la porte (1), lesdits moyens de détection d'obstacle étant eux-même inhibés par des moyens de commutation après le franchissement d'au moins un cran de fermeture par la porte coulissante (1), **caractérisé en ce que** le dispositif anti-pincement comporte au moins un profilé (3) disposé sur la porte et/ou sur au moins un élément adjacent (4 ; 5) conformé pour obstruer l'espace sensiblement vertical entre la porte coulissante (1) et l'élément adjacent (4 ; 5) sur au moins une partie de la hauteur de l'ouverture (6), lorsque la porte coulissante (1) a franchi au moins ledit cran de fermeture, de sorte que le profilé (3) empêche ou limite le coincement d'un corps étranger tel qu'un doigt après le franchissement du cran de fermeture.

2. Dispositif anti-pincement selon la revendication 1 **caractérisé en ce que** le profilé (3) comporte dans sa partie avant au moins une lèvre (3a) apte à être au moins en partie masquée par la porte (1) et/ou l'élément adjacent (4 ; 5) lorsque la porte coulissante (1) est complètement fermée.

3. Dispositif anti-pincement selon la revendication 1 ou 2, **caractérisé en ce que** le profilé (3) est fixé sur au moins un bord sensiblement vertical (1a) de la porte (1) et/ou sur l'élément adjacent (4 ; 5) au bord (1a).

4. Dispositif anti-pincement selon l'une quelconque des revendications 1 à 3, **caractérisé en ce que** le profilé (3) est fixé par collage.

5. Dispositif anti-pincement selon l'une quelconque des revendications 1 à 4, **caractérisé en ce que** le profilé (3) est enfilé par chevauchement sur une arête saillante (1b) d'un bord sensiblement vertical (1a) de la porte (1) et/ou de l'élément adjacent (4 ; 5).

6. Dispositif anti-pincement selon l'une quelconque des revendications 1 à 5, **caractérisé en ce que** le profilé (1) est en matière rigide ou semi-rigide du type plastique ou caoutchouc.

7. Dispositif anti-pincement selon l'une quelconque des revendications 1 à 6, **caractérisé en ce que** la lèvre (3a) du profilé (3) est déformable lors du coincement d'un corps étranger entre le bord (1a) de la porte (1) et l'élément adjacent (4 ; 5).

8. Véhicule comportant au moins une porte coulissante (1), des moyens motorisés d'assistance à l'ouverture et/ou à la fermeture de la porte (1), des moyens de détection d'un obstacle lors de la manoeuvre de la porte (1) aptes à inhiber les moyens d'assistance, **caractérisé en ce qu'**il comprend un dispositif anti-pincement selon l'une quelconque des revendications précédentes.

9. Véhicule selon la revendication 8 **caractérisé en ce qu'**il comprend des moyens de commutation aptes à inhiber les moyens de détection d'obstacle après le franchissement d'au moins un cran de fermeture par la porte coulissante (1).

## Claims

1. Anti-pinch device for a sliding door (1) of a motor vehicle, it being possible to assist the opening and/or closing of the sliding door by motorised assistance means, it being possible to inhibit the latter by obstacle detection means when the door (1) is operated, said obstacle detection means themselves being inhibited by switch means after at least one closing notch has been passed by the sliding door (1), **characterised in that** the anti-pinch device comprises at least one section (3) arranged on the door and/or at least one adjacent element (4; 5) shaped so as to obstruct the substantially vertical space between the sliding door (1) and the adjacent element (4; 5) over at least part of the height of the opening (6), when the sliding door (1) has passed at least said closing notch, so that the section (3) prevents or limits the trapping of a foreign body such as a finger after the closing notch has been passed.

2. Anti-pinch device according to Claim 1 **characterised in that** the section (3) comprises, in its front part, at least one lip (3a) capable of being at least partly masked by the door (1) and/or the adjacent element (4; 5) when the sliding door (1) is completely closed.

3. Anti-pinch device according to Claim 1 or 2, **characterised in that** the section (3) is fixed to at least one substantially vertical edge (1a) of the door (1) and/or to the element (4; 5) adjacent to the edge (1a).

4. Anti-pinch device according to any one of Claims 1 to 3, **characterised in that** the section (3) is fixed by gluing.

5. Anti-pinch device according to any one of Claims 1 to 4, **characterised in that** the section (3) is threaded by overlapping a projecting edge (1b) of a substantially vertical edge (1a) of the door (1) and/or of the adjacent element (4; 5).

6. Anti-pinch device according to any one of Claims 1 to 5, **characterised in that** the section (1) is made of rigid or semi-rigid material of the plastic or rubber type.

7. Anti-pinch device according to any one of Claims 1 to 6, **characterised in that** the lip (3a) of the section (3) is deformable when a foreign body is trapped between the edge (1 a) of the door (1) and the adjacent element (4; 5).

8. Vehicle comprising at least one sliding door (1), motorised means for assisting the opening and/or closing of the door (1), means for detecting an obstacle when the door (1) is operated, capable of inhibiting the assistance means, **characterised in that** it comprises an anti-pinch device according to any one of the preceding claims.

9. Vehicle according to Claim 8 **characterised in that** it comprises switch means capable of inhibiting the obstacle detection means after at least one closing notch has been passed by the sliding door (1).

## Patentansprüche

1. Einklemmschutz für eine Schiebetür (1) eines Kraftfahrzeugs, deren Öffnen und/oder Schließen von Servomotoren unterstützt werden kann, die beim Bedienen der Tür (1) von Mitteln zum Feststellen eines Hindernisses angehalten werden können, wobei die Mittel zum Feststellen eines Hindernisses wiederum von , Schaltmitteln außer Kraft gesetzt werden können, wenn die Schiebetür (1) mindestens eine Schließstufe überschritten hat, **dadurch gekennzeichnet, dass** der Einklemmschutz mindestens ein Profil (3) aufweist, das an der Tür und/oder mindestens einem angrenzenden Element (4; 5) angeordnet ist und den im Wesentlichen vertikalen Raum zwischen der Schiebetür (1) und dem angrenzenden Element (4; 5) auf mindestens einem Abschnitt der Höhe der Öffnung (6) versperren kann, wenn die Schiebetür (1) mindestens die Schließstufe überschritten hat, sodass das Profil (3) das Einklemmen eines Fremdkörpers wie beispielsweise eines Fingers nach Überschreiten der Schließstufe verhindert oder begrenzt.

2. Einklemmschutz nach Anspruch 1, **dadurch gekennzeichnet, dass** das Profil (3) in seinem vorderen Abschnitt mindestens eine Lippe (3a) aufweist, die zumindest teilweise von der Tür (1) und/oder dem angrenzenden Element (4; 5) verdeckt sein kann, wenn die Schiebetür (1) vollständig geschlossen ist.

3. Einklemmschutz nach Anspruch 1 oder 2, **dadurch gekennzeichnet, dass** das Profil (3) an mindestens einem im Wesentlichen vertikalen Rand (1a) der Tür (1) und/oder am angrenzenden Element (4; 5) am Rand (1a) befestigt ist.

4. Einklemmschutz nach einem der Ansprüche 1 bis 3, **dadurch gekennzeichnet, dass** das Profil (3) durch Kleben befestigt ist.

5. Einklemmschutz nach einem der Ansprüche 1 bis 4, **dadurch gekennzeichnet, dass** das Profil (3) überlappend auf einer vorspringenden Kante (1b) eines im Wesentlichen vertikalen Rands (1a) der Tür (1) und/oder des angrenzenden Elements (4; 5) sitzt).

6. Einklemmschutz nach einem der Ansprüche 1 bis 5, **dadurch gekennzeichnet, dass** das Profil (1) aus starrem oder halbstarrem Material wie Kunststoff oder Gummi ist.

7. Einklemmschutz nach einem der Ansprüche 1 bis 6, **dadurch gekennzeichnet, dass** die Lippe (3a) des Profils (3) beim Einklemmen eines Fremdkörpers zwischen dem Rand (1a) der Tür (1) und dem angrenzenden Element (4; 5) verformbar ist.

8. Fahrzeug mit mindestens einer Schiebetür (1), einem Servomotor zum Unterstützen des Öffnens und/oder Schließens der Tür (1), Mitteln zum Feststellen eines Hindernisses beim Bedienen der Tür (1), welche die Hilfsmittel anhalten können, **dadurch gekennzeichnet, dass** es einen Einklemmschutz nach einem der vorhergehenden Ansprüche aufweist.

9. Fahrzeug nach Anspruch 8, **dadurch gekennzeichnet, dass** es Schaltmittel aufweist, welche die Mittel zum Feststellen eines Hindernisses außer Kraft setzen können, wenn die Schiebetür (1) mindestens eine Schließstufe überschritten hat.
